# EUROPÄISCHE PATENTANMELDUNG

(11) **EP 1 518 452 A1**
(43) Veröffentlichungstag der Anmeldung: **30.03.2005**
(21) Anmeldenummer: 04021322.5
(22) Anmeldetag: 08.09.2004
(51) Int. Cl.: A01D 41/127

(54) **Wägesystem an einer landwirtschaftlichen Maschine**

(30) Priorität: 29.09.2003 DE 10345612
(71) Anmelder: CLAAS Selbstfahrende Erntemaschinen GmbH, 33428 Harsewinkel (DE)
(72) Erfinder: Behnke, Willi, 33803 Steinhagen (DE); Bühlmeier, Robert, 33442 Herzebrock-Clarholz (DE); Quincke, Gunnar, 59494 Soest (DE)

(57) **Zusammenfassung**

Die Erfindung betrifft ein außerhalb der Funktionsorgane eines selbstfahrenden Mähdreschers (1), angeordnetes Wägesystem (2) zur Ermittlung der in dem Ernteguttank (4) tatsächlich vorhandenen Erntegutmasse (7).

Dadurch, dass das zumindest aus einem Aufnahmebehältnis (19), Wiegezelle (23) sowie Referenzwaage (24) zusammengesetzte Wägesystem (2) außerhalb der Funktionsorgane eines selbstfahrenden Mähdreschers (1) angeordnet ist, ist das Wägesystem (2) frei von außen zugänglich und kann damit einfach gewartet werden. Die Auslagerung des Wägesystems (2) hat zudem die vorteilhafte Wirkung, dass kein Korntankvolumen verloren geht und eine Beeinflussung der Wägung durch das Erntegut (7) selbst ausgeschlossen ist.

## Beschreibung

Die Erfindung betrifft ein außerhalb der Funktionsorgane eines selbstfahrenden Mähdreschers, angeordnetes Wägesystem zur Ermittlung des in dem Ernteguttank tatsächlich vorhandenen Ernteguts.

Die DE 195 41 167 A1 offenbart eine Vorrichtung und ein Verfahren zur Kalibrierung der Messung eines Erntegutstromes in landwirtschaftlichen Erntemaschinen. Sowohl die Kalibriereinrichtung als auch die Messeinrichtung sind innerhalb eines Korntanks eines selbstfahrenden Mähdreschers, angeordnet. Die Kalibriereinrichtung selbst besteht aus einem Sammelbehälter, einer Wiegeeinrichtung und Befestigungsmitteln. Die Kalibriereinrichtung und der Sammelbehälter sind beweglich in dem Korntank aufgehängt. Zur Stabilisierung ist der Sammelbehälter seitlich durch Federn abgestützt. Die Umlenkung des Gutstrom erfolgt mittels einer in die Vorrichtung integrierten Klappe, die aufwärts oder abwärts verschwenkbar ist und hierdurch das Erntegut zur Messeinrichtung umlenken kann.

Die interne Anordnung der Kalibriereinrichtung und der Messeinrichtung innerhalb des Korntanks des Mähdreschers wirkt sich nachteilig auf eine exakte Messung und Kalibrierung aus. So ist das sensible Messsystem dem umherfliegenden zugeführten Erntegut ausgesetzt, was ein genaues Erfassen relevanter Daten erschwert und gegebenenfalls sogar verfälscht. Zudem kann es dazu kommen, dass das abgeerntete Gut das Sammelbehältnis der Messeinrichtung von außen dauerhaft beaufschlagt und hierdurch Messungenauigkeiten herbeiführt. Ebenso kann ein gefüllter Korntank die Wertermittlung beeinflussen, indem das nachrückende Erntegut bis zu dem Sammelbehältnis ansteigt und dabei das Sammelbehältnis verschiebt, wodurch eine korrekte Massemessung nicht erfolgen kann.
Nachteilig wirkt sich zudem die Aufhängung sowie die Abstützung durch Federn aus. Da während der Erntefahrt der Mähdrescher die Unebenheiten des Feldbodens passieren muss, erfährt der Mähdrescher hierdurch starke Schwankungen, die auf das Sammelbehältnis übertragen werden. Die bewegbare Aufhängung vermag hieran nichts zu ändern. Bei dem Einsatz von Federn besteht zudem die grundsätzliche Gefahr, dass sich bei häufiger und starker Beanspruchung ihre Federkraft reduziert, so dass sich die bewegliche Integration des Sammelbehältnis in den Korntank auf lange Sicht negativ auf die Messgenauigkeit auswirkt.

Es ist daher Aufgabe der vorliegenden Erfindung die Nachteile des Standes der Technik zu vermeiden und ein hohes Maß an Messgenauigkeit über einen langen Zeitraum zu gewährleisten.

Diese Aufgabe wird erfindungsgemäß durch die kennzeichnenden Merkmale des Patentanspruchs 1 gelöst, wobei in den weiteren Patentansprüchen Merkmale aufgeführt sind, die diese Lösung in vorteilhafter Weise weiterentwickeln.

Indem das gesamte Wägesystem, außerhalb der Funktionsorgane, insbesondere außerhalb des Korntanks der landwirtschaftlichen Erntemaschine, angeordnet ist, wird ein störungsfreier Messvorgang ermöglicht. So wird eine Beaufschlagung des Wägesystems durch abgeerntetes Erntegut oder ein vollständiges Verschieben des Wägesystems durch im Korntank nachrückendes Erntegut als besondere die Messergebnisse verfälschende Faktoren ausgeschlossen. Ferner ist das Wägesystem frei von außen zugänglich und kann damit einfach gewartet werden. Die Auslagerung des Wägesystems hat zudem den Vorteil, dass kein Korntankvolumen verloren geht.

Die Anordnung der Wiegezelle und der Referenzwaage unterhalb des Aufnahmebehältnisses erhöht die Wiegegenauigkeit. Ferner bedarf es lediglich einer Wiegezelle um eine Messung durchzuführen. Durch die Anordnung unterhalb des Aufnahmebehältnisses erfolgt eine gleichmäßige und ungestörte Gutzufuhr und Gutabgabe, da das Erntegut nicht an der Wiegezelle vorbei fließen muss und die Wiegezelle nicht berühren kann, wodurch eine Messwertverfälschung ausgeschlossen wird.

Die Ummantelung des Aufnahmebehältnisses mit schwingungsabsorbierenden Dämpfungselementen verhindert eine Überlastung der Wiegezelle aufgrund starker, durch Bodenunebenheiten hervorgerufener Stöße.

Durch die starre Verbindung der Wiegezelle mit dem Aufnahmebehältnis wird eine direkte Masseübertragung ermöglicht, die eine Auslegung der Wiegezelle dahingehend zulässt, dass sowohl Längs- als auch Querkräfte aufgenommen werden können, ohne dass zusätzliche Stützlagerungen erforderlich sind.

Die Befüllung des Aufnahmebehältnisses erfolgt durch eine Gutentnahmeklappe. Diese Gutentnahmeklappe ist quer zur Gutflussrichtung verschwenkbar. Diese Art der Verschwenkbarkeit ermöglicht ein schnelles Schließen und Öffnen der Gutentnahmeklappe, ohne Erntegutstauungen zu verursachen. Hierdurch werden Messungenauigkeiten weiter eingegrenzt.

Weitere vorteilhafte Ausgestaltungen sind Gegenstand weiterer Unteransprüche und werden nachfolgend anhand von Zeichnungen näher erläutert.

### Es zeigen

- Figur 1: die schematische Darstellung eines selbstfahrenden Mähdreschers mit erfindungsgemäßem Wägesystem in Seitenansicht
- Figur 2: die schematische Darstellung des Zwischenstücks mit verschwenkbarer Gutentnahmeklappe gemäß strichliniert in Figur 1 gekennzeichneten Teilbereich A

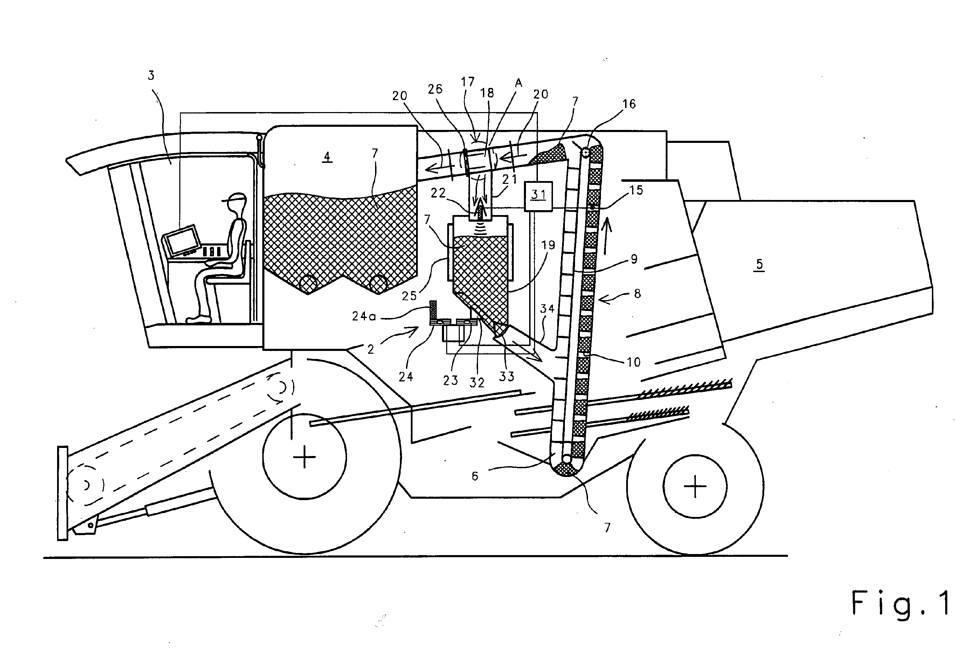

In der Figur 1 ist in schematischer Darstellung ein selbstfahrender Mähdrescher 1 mit einem dazugehörigen erfindungsgemäßen, außerhalb der Funktionsorgane - die beispielsweise von dem Korntank 4 oder anderen, nicht abgebildeten Arbeitsaggregaten eines Mähdreschers 1 gebildet werden - angeordneten Wägesystem 2 in Seitenansicht dargestellt.
Der Mähdrescher 1 besteht unter anderem aus einer Fahrerkabine 3, einem Korntank 4, einer Karosserie 5, zumindest einer Körnerschnecke 6, wenigstens einem Elevator 8 und unterschiedlichen nicht dargestellten Arbeitsaggregaten. Die Körnerschnecke 6 transportiert das zuvor ausgedroschene und gereinigte Erntegut 7 an einen Elevator 8. Der Elevator 8 nimmt das Erntegut 7 an und fördert es mittels an einer umlaufenden Kette 9 angeordneten Paddeln 10 aufwärtig in Richtung Korntank 4. Hierbei wandern die mit Erntegut 7 beauflagten Paddel 10 an mindestens einem optischen und/oder kapazitiven Sensor 15 vorbei, der die Menge des Erntegutes 7 in an sich bekannter und deshalb nicht näher beschriebener Weise erfasst. Am oberen Ende des Elevators 8 ist ein Umlenkrad 16 angeordnet. Durch das Umlenken der mit Erntegut 7 beauflagten Paddel 10 werden die Körner in Richtung Korntank 4, auf ein zwischen Korntank 4 und Umlenkrad 16 angeordnetes Zwischenstück 17, geworfen. Hierbei passieren die Körner eine in die Seitenwand des Zwischenstücks 17 integrierte Gutentnahmeklappe 18.
Die Gutentnahmeklappe 18 hat die Funktion das Erntegut 7 an das unterhalb des Zwischenstückes 17 angeordnete Wägesystem 2 abzufördern. Das Wägesystem 2 setzt sich im dargestellten Ausführungsbeispiel aus zumindest einem Zuführschacht 21, einem Befüllsensor 22, einem Aufnahmebehältnis 19, einer Wiegezelle 23, einer Referenzwaage 24 und einer seitlichen Wandung 25 zusammen.

Die Umlenkung des Erntegutstroms 20 in das Aufnahmebehältnis 19 ist notwendig, um die für eine Messung notwendigen Daten, wie z.B. Durchsatzmenge oder Befüllzeit, zu ermitteln und eine sich hieran anschließende gegebenenfalls erforderliche Kalibrierung des Wägesystems 2 vornehmen zu können. Die Kalibrierung wird nach allgemein bekannten Vorgaben durchgeführt. Die Zuführung des Ernteguts 7 erfolgt durch ein Verschwenken der Gutentnahmeklappe 18 quer zur Gutflussrichtung 20 und um eine vertikale Achse 26. Durch das quer zur Gutflussrichtung 20 erfolgende Verschwenken der Gutentnahmeklappe 18 wird eine sichere und zügige Entnahme einer Teilmenge von Körnern aus dem Erntegutstrom 20 gewährleistet, ohne ein mit dem Zwischenstück 17 fluchtendes und sicheres Verschließen der Gutentnahmeklappe 18 zu gefährden. Die verschlossene Gutentnahmeklappe 18 ist erforderlich, da ansonsten der Gutfluss 20 durch eine teilweise geöffnete Gutentnahmeklappe 18 gestört wird und darüber hinaus permanent Körner in das Aufnahmebehältnis 19 nachlaufen. Durch ständig nachlaufendes Erntegut 7 würden die für ein objektives Messergebnis benötigten Werte einer dauerhaften Veränderung unterliegen und damit den gesamten Mess- und Kalibriervorganges verfälschen.

Nach der Entnahme einer Teilmenge an Körnern aus dem Gutfluss 20 , fallen die Körner durch einen Zuführschacht 21 in ein Aufnahmebehältnis 19. Voraussetzung der Befüllung ist ein zuvor vollständig entleertes Aufnahmebehältnis 19. Den Befüllstand des Behältnisses 19 ermittelt ein mittig über dem Behältnis angeordneter Befüllsensor 22, der die ermittelten Daten zu einer Auswerteelektronik 31 weiterleitet, die aufgrund der empfangenen Signale den Befüllvorgang auslöst.
Da die Menge des durch das Zwischenstück 17 fließende Erntegut 7 gegebenenfalls sehr hoch sein kann, muss die Gutentnahmeklappe 18 sehr schnell schließen. Es kann unter sehr widrigen Erntebedingungen dennoch dazu kommen, dass der Verschluss der Gutentnahmeklappe 18 nicht schnell genug erfolgt oder gegebenenfalls nicht richtig schließt. Dies hätte ein ständiges Nachfließen von Erntegut in das Aufnahmebehältnis 19 zur Folge. Um ein Zulaufen des Aufnahmebehältnisses 19 zu vermeiden hat es sich als nützlich erwiesen, das Aufnahmebehältnis 19 nur bis zu ungefähr drei Viertel seines Volumens zu befüllen. Das restliche, nicht befüllte Viertel dient als Art Materialpuffer und fungiert als Restaufnahmekapazität für nachlaufendes Erntegut 7. Zweckdienlich ist ferner das Aufnahmebehältnis 19 an seiner Oberseite 30 geöffnet zu belassen. Sollte eine erhebliche Menge an Erntegut 7 nachfließen, so besteht die Möglichkeit, dass das Erntegut 7 das Aufnahmebehältnis 19 verlässt und daher keine vollständige Verstopfung auftritt. Anderenfalls käme es zu einer Druckerhöhung innerhalb des Aufnahmebehältnisses 19, welche die Messungen verfälscht. Um diese Messfehler zu vermeiden, kann aufgrund der zugrundeliegenden erfindungsgemäßen Ausführung, überschüssiges Erntegut 7 aus dem geöffneten Aufnahmebehältnis 19 entweichen sowie vom Befüllsensor 22 erkannt werden. Der Befüllsensor 22 generiert sodann ein Signal an die Auswerteelektronik 31, die nach Empfang des Signals die bisher erfolgte Messung verwirft, eine Entleerung des Aufnahmebehältnisses 19 auslöst und nach vollständiger Entleerung des Aufnahmebehältnisses 19 eine erneute Messung durchführt.

Soweit die Befüllung ordnungsgemäß erfolgt ist, wird die Masse des mit Erntegut 7 befüllten Aufnahmebehältnisses 19 durch eine unterhalb des Aufnahmebehältnisses 19 angeordneten Wiegezelle 23 in an sich bekannter Weise ermittelt. Die Anordnung der Wiegezelle 23 unterhalb des Aufnahmebehältnisses 19 hat zudem den Vorteil, dass die Gutzufuhr zum Aufnahmebehältnis 19 nicht behindert wird.
Darüber hinaus ist die Wiegezelle 23 über eine starre Verbindung 32 mit dem Aufnahmebehältnis 19 verbunden, wobei das Aufnahmebehältnis 19 selbst von einer vorzugsweise elastischen Wandung 25 umgeben ist. Die Wandung 25 sowie die starre Verbindung 32 zwischen Aufnahmebehältnis 19 und Wiegezelle 23 schützen die Wiegezelle 23 vor Überlastungen. Diese Überlastungen, durch beispielsweise starke Erschütterungen, treten, aufgrund von Bodenunebenheiten auf dem Feld, bei nahezu jeder Erntefahrt auf. Im Rahmen der Erfindung ist denkbar, das mittels einer in der Wandung 25 integrierten Sensorik ein Aussetzen des Messvorganges erfolgt und dieser Messvorgang erst dann wieder einsetzt, sobald sich die Erntefahrt auf ein bestimmtes zuvor definiertes Normalmass angenähert hat. Gegebenenfalls wird die Messung komplett verworfen, das Aufnahmebehältnis 19 entleert und eine neue Messung eingeleitet.

Zur Unterstützung der Messgenauigkeit dient eine mit einem Referenzgewicht 24a bestückte Referenzwaage 24. Die Referenzwaage 24 nimmt die dynamischen Veränderungen, die sich aufgrund von Vibrationen, Neigung oder Gravitation ergeben, auf und leitet den ermittelten Wert der Auswerteelektronik 31 zu. Dieser Wert ist aufgrund des stets gleich bleibenden Masse des Referenzgewichts 24a ein objektiver Wert, welcher ins Verhältnis zu der im Aufnahmebehältnis 19 tatsächlich vorhandenen Erntegutmasse gesetzt wird. Auf diese Weise werden die zu Messungenauigkeiten führenden oben benannten Faktoren ausgefiltert und mit der zu ermittelten Erntegutmasse verrechnet.

Nach einem durchlaufenen Messvorgang wird eine im unteren Bereich des Aufnahmebehältnisses 19 angeordnete Klappe 33 geöffnet und das Erntegut 7 kann aus dem Aufnahmebehältnis schwerkraftabhängig heraus fließen. Nachdem das Erntegut 7 vollständig aus dem Aufnahmebehältnis 19 geflossen ist, verschließt die Klappe 33 das Aufnahmebehältnis 19 und ein neuer Messvorgang kann gestartet werden.
Das herausfließende Erntegut 7 wird über einen Schacht 34 wieder dem Elevator 8 zugeführt. Alternativ kann das Erntegut 7 aber auch über eine nicht abgebildete Fördervorrichtung direkt dem Korntank 4 zugeführt werden.

Um eine möglichst genaue Messung vornehmen zu können ist es möglich, bestimmte Parameter als Grundlage in die Messung mit aufzunehmen. So hat es sich als sinnvoll erwiesen eine maximale Gutumlenkzeit sowie die Überwachung des Offnungswinkels der Gutentnahmeklappe 18 festzulegen um beispielsweise ein Klemmen der Gutentnahmeklappe 18 frühzeitig zu erkennen.

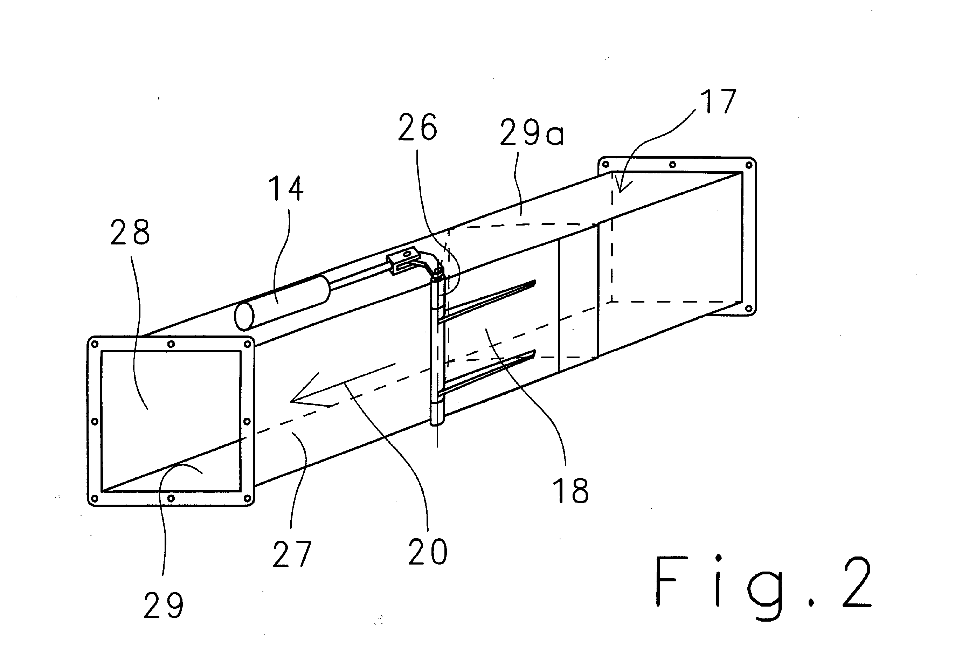

Die Figur 2 zeigt die schematische Darstellung des Zwischenstücks 17 mit verschwenkbarer Gutentnahmeklappe 18 gemäß dem in Figur 1 strichliniert gekennzeichneten Teilbereich A. Die Gutentnahmeklappe 18 ist über eine vertikale Achse 26 verschwenkbar und wird über eine Kolbenzylindereinheit 14 angesteuert. Angeordnet ist die Gutentnahmeklappe 18 in der Seitenwand 27 des Zwischenstücks 17. Das Öffnen der Gutentnahmeklappe 18 erfolgt durch ein Verschwenken in den Innenraum des Zwischenstücks 17 bis zu dem bündigen Anliegen der Gutentnahmeklappe 18 an der Innenseite der gegenüberliegenden Seitenwand 28. Der Schwenkweg bis zur vollständigen Öffnung der Gutentnahmeklappe 18 ist strichliniert dargestellt. Ebenso erforderlich ist, dass die Gutentnahmeklappe 18 an dem Boden 29 und der Decke 29a des Zwischenstückes 17 bündig abschließt. Insgesamt wird durch die vollständig geöffnete Stellung der Gutentnahmeklappe 18 ein Vorbeiwandern des Ernteguts 7 an der Gutentnahmeklappe 18 verhindert, wodurch der gesamte tatsächliche Gutstrom erfasst wird und als ein genauer Wert in die Messung einfließt.
Im Rahmen der Anordnung der Gutentnahmeklappe 18 wäre auch vorstellbar, die Gutentnahmeklappe 18 in den Boden 29 des Zwischenstücks 17 zu integrieren, wobei die Gutentnahmeklappe 18 in vorteilhafter Weise abwärtig verschwenkbar ist.

Das erfindungsgemäße Wägesystem 2 kann an jeder von der Karosserie 5 umschlossenen Stelle innerhalb des selbstfahrenden Mähdreschers 1 angeordnet sein und beschränkt sich nicht nur auf Mähdrescher 1, sondern auf jede Art von landwirtschaftliche Arbeits- oder Erntemaschinen.

### Bezugszeichenliste:

- 1: Mähdrescher
- 2: Wägesystem
- 3: Fahrerkabine
- 4: Korntank
- 5: Karosserie
- 6: Körnerschnecke
- 7: Erntegut
- 8: Elevator
- 9: Kette
- 10: Paddel
- 14: Kolbenzylindereinheit
- 15: Sensor
- 16: Umlenkrad
- 17: Zwischenstück
- 18: Gutentnahmeklappe
- 19: Aufnahmebehältnis
- 20: Gutflussrichtung
- 21: Zuführschacht
- 22: Befüllsensor
- 23: Wiegezelle
- 24: Referenzwaage
- 24a: Referenzgewicht
- 25: Wandung
- 26: Achse
- 27: Seitenwand
- 28: Seitenwand
- 29: Boden
- 29a: Decke
- 30: Oberseite
- 31: Auswerteelektronik
- 32: Verbindung
- 33: Klappe
- 34: Schacht

## Patentansprüche

1. Wägesystem (2) an einem aus mehreren Funktionsorganen, wie Korntank (4), Körnerschnecke (6), Elevator (8) und unterschiedlichen Arbeitsaggregaten bestehenden selbstfahrenden Mähdrescher (1) zur Ermittlung der im Korntank (4) vorhandenen Erntegutmasse,
**dadurch gekennzeichnet, dass** das Wägesystem (2) außerhalb der Funktionsorgane (4, 6, 8) des Mähdreschers (1) angeordnet ist.

2. Wägesystem nach Anspruch 1,
**dadurch gekennzeichnet, dass** das Wägesystem (2) aus zumindest einem Aufnahmebehältnis (19), wenigstens einer Wiegezelle (23) und wenigstens einer Referenzwaage (24) besteht.

3. Wägesystem nach einem oder mehreren der vorangegangenen Ansprüche,
**dadurch gekennzeichnet, dass** die Wiegezelle (23) und die Referenzwaage (24) unterhalb des Aufnahmebehältnisses (19) angeordnet sind.

4. Wägesystem nach einem oder mehreren der vorangegangenen Ansprüche,
**dadurch gekennzeichnet, dass** das Aufnahmebehältnis (19) von schwingungsabsorbierendem Dämpfungselementen (25) umgeben ist.

5. Wägesystem nach einem oder mehreren der vorangegangenen Ansprüche,
**dadurch gekennzeichnet, dass** das Aufnahmebehältnis (19), das schwingungsabsorbierende Dämpfungselement (25), die Wiegezelle (23) und die Referenzwaage (24) miteinander in Wirkverbindung stehen.

6. Wägesystem nach einem oder mehreren der vorangegangenen Ansprüche,
**dadurch gekennzeichnet, dass** die Wiegezelle (23) mit dem Aufnahmebehältnis (19) starr verbunden ist.

7. Wägesystem nach einem oder mehreren der vorangegangenen Ansprüche,
**dadurch gekennzeichnet, dass** die Befüllung und Entleerung des Aufnahmebehältnisses (19) schwerkraftabhängig erfolgt.

8. Wägesystem nach einem oder mehreren der vorangegangenen Ansprüche,
**dadurch gekennzeichnet, dass** die Befüllung des Aufnahmebehältnisses (19) durch eine Gutentnahmeklappe (18) erfolgt.

9. Wägesystem nach einem oder mehreren der vorangegangenen Ansprüche,
**dadurch gekennzeichnet, dass** die Gutentnahmeklappe (18) quer zur Gutflussrichtung (20) verschwenkbar ist

10. Wägesystem nach einem oder mehreren der vorangegangenen Ansprüche,
**dadurch gekennzeichnet, dass** ein Funktionsorgan zumindest der Korntank (4) des Mähdreschers (1) ist.

11. Wägesystem nach einem oder mehreren der vorangegangenen Ansprüche,
**dadurch gekennzeichnet, dass** das Wägesystem (2) von der Karosserie (5) umschlossen wird.
